# FASCICULE DE BREVET EUROPEEN

(11) **EP 4 153 480 B1**
(45) Date de publication et mention de la délivrance du brevet: **12.02.2025**
(21) Numéro de dépôt: 21727441.4
(22) Date de dépôt: 19.05.2021
(51) Int. Cl.: B64C 25/10, B64C 25/18, B64C 25/20, B64C 25/26

(54) **ATTERRISSEUR ESCAMOTABLE D'AÉRONEF EQUIPE D'UNE CONTREFICHE À ACTIONNEUR INTÉGRÉ**
EINZIEHFAHRWERK MIT EINER KNICKSTREBE UND DARIN INTEGRIERTEM AKTUATOR
RETRACTABLE LANDING GEAR EQUIPPED WITH A BREAKER STRUT WITH INTEGRATED ACTUATOR

(30) Priorité: 20.05.2020 FR 2005320
(43) Date de publication de la demande: 29.03.2023
(73) Titulaire: Safran Landing Systems, 78140 Vélizy-Villacoublay (FR)
(72) Inventeur: KOANE-YANE, Thomas, 77550 MOISSY-CRAMAYEL (FR)
(74) Mandataire: Cabinet Boettcher
(86) Numéro de dépôt international: PCT/EP2021/063228
(87) Numéro de publication internationale: WO 2021/233963

(56) Documents cités:
- EP-A1- 3 263 450
- BE-A- 414 427
- GB-A- 529 460
- US-A- 2 959 381

## Description

### ARRIERE PLAN DE L'INVENTION

Sur les aéronefs rapides, les atterrisseurs sont prévus escamotables en vol. Chaque atterrisseur est ainsi monté mobile (le plus souvent pivotant) entre une position déployée et une position escamotée dans laquelle l'atterrisseur est stocké dans une soute de l'aéronef.

Pour stabiliser l'atterrisseur en position déployée, on utilise un organe de contreventement, appelé contrefiche, qui est attelé entre la structure de l'aéronef et la jambe de l'atterrisseur, et qui peut être rigidifié lorsque l'atterrisseur est en position déployée pour créer un ensemble rigide triangulé par la contrefiche et ainsi immobiliser l'atterrisseur en position déployée.

Parmi les contrefiches connues, on distingue la contrefiche briseuse qui comporte deux éléments articulés entre eux, l'un des éléments étant attelé à la structure de l'aéronef et l'autre des éléments étant attelé à la jambe de l'atterrisseur. Lorsque l'atterrisseur arrive en position déployée, les deux éléments de la contrefiche viennent en position sensiblement alignée et sont automatiquement verrouillés dans cette position, stabilisant ainsi l'atterrisseur en position déployée. L'articulation (ou genou) de la contrefiche permet la brisure de cet alignement lors du relevage de l'atterrisseur pour permettre le libre déplacement de l'atterrisseur entre la position déployée et la position escamotée.

Le verrouillage de la contrefiche briseuse en position sensiblement alignée est assuré par un verrou interne (par exemple sur l'atterrisseur auxiliaire de l'avion ATR42), ou encore par un verrou externe sous la forme d'une contrefiche secondaire attelée à la contrefiche principale (par exemple sur l'atterrisseur auxiliaire de l'avion AIRBUS A320). Le verrouillage peut encore être simplement assuré par le rappel des éléments de la contrefiche par des ressorts vers la position sensiblement alignée définie par des butées.

Pour assurer le relevage de l'atterrisseur vers la position escamotée, il convient de doter l'atterrisseur d'un actionneur de déverrouillage pour faire passer la contrefiche de la position sensiblement alignée à une position brisée, et d'un actionneur de manoeuvre pour relever l'atterrisseur vers la position escamotée. Il faut ainsi prévoir la gestion de la séquence d'activation de ces deux actionneurs.

L'état de l'art est illustré par le document BE 414 427 A. Ce document propose l'utilisation d'un seul actionneur linéaire pour à la fois déverrouiller et relever l'atterrisseur vers sa position escamotée. Les deux bras de la contrefiche briseuse sont articulés séparément sur le corps de cet actionneur, ce qui résulte en un dispositif complexe et encombrant.

### OBJET DE L'INVENTION

L'invention vise à proposer un atterrisseur muni d'une contrefiche briseuse simple à mettre en oeuvre.

### PRESENTATION DE L'INVENTION

En vue de la réalisation de ce but, on propose un atterrisseur d'aéronef comportant une jambe destinée à être montée mobile sur une structure de l'aéronef entre une position déployée et une position escamotée, l'atterrisseur étant équipé d'une contrefiche briseuse comportant deux éléments articulés entre eux au niveau d'un genou, avec un premier élément destiné à être attelé à la structure de l'aéronef et un deuxième élément destiné à être attelé à l'atterrisseur, un organe de rappel étant disposé entre les deux éléments rappelant ceux-ci vers une position sensiblement alignée définie par des butées respectives. Selon l'invention, l'un des éléments de la contrefiche intègre un actionneur linéaire comportant une tige coulissante qui est attelée à l'autre élément de la contrefiche par l'intermédiaire d'une biellette, le tout étant agencé de sorte que le déplacement de la tige coulissante de l'actionneur dans un seul et même sens provoque successivement le désalignement des éléments de la contrefiche et le déplacement de l'atterrisseur de la position déployée à la position escamotée.

Par intégré, on entend que l'actionneur linéaire est entièrement solidaire de l'élément de contrefiche associé, soit en étant rapporté par vissage ou tout autre moyen de fixation, ou dont le corps constitue directement l'élément de contrefiche. Dans ce dernier cas, le corps de l'actionneur porte directement l'articulation avec l'autre élément de la contrefiche, et l'articulation avec celui de l'atterrisseur ou de la structure auquel il est attelé, ce qui fait du corps de l'actionneur un élément structurel de la contrefiche.

L' atterrisseur comporte un seul actionneur pour assurer le déverrouillage de la contrefiche et son relevage vers la position escamotée. L'actionneur est intégré à l'un des éléments de la contrefiche, de sorte qu'aucune articulation supplémentaire n'est nécessaire.

Selon un premier mode de réalisation particulier de réalisation, la tige coulisse selon un axe de coulissement qui est contenu dans un plan défini par des axes d'articulation de l'élément de contrefiche auquel il est intégré.

Selon un autre aspect particulier de l'invention, l'actionneur linéaire est intégré à celui des éléments de contrefiche qui est attelé à la jambe de l'atterrisseur.

Selon encore un autre aspect particulier de l'invention, celui des éléments de contrefiche qui ne porte pas l'actionneur linéaire a une forme générale de panneau.

Selon un deuxième mode de réalisation particulier de l'invention, la tige coulisse selon un axe de coulissement qui est distinct d'un plan défini par des axes d'articulation de l'élément de contrefiche auquel il est intégré.

Selon encore un autre aspect particulier de l'invention, les butées comportent, d'une part, une extrémité d'un pied saillant de l'élément de contrefiche portant l'actionneur linéaire et, d'autre part, une extrémité de la biellette qui est articulée sur l'autre élément de contrefiche.

### DESCRIPTION DES FIGURES

L'invention sera mieux comprise à la lumière de la description qui suit de modes particuliers de réalisation de l'invention, en référence aux figures des dessins annexés, parmi lesquelles :
- la figure 1 est une vue de côté schématique d'un atterrisseur d'aéronef comportant une contrefiche selon un premier mode particulier de réalisation de l'invention ;
- la figure 2 est une vue en perspective de la contrefiche équipant l'atterrisseur de la figure 1, la biellette étant représentée en pointillés pour plus de clarté ;
- la figure 3 est une vue en coupe de la contrefiche de la figure 1 en position verrouillée ;
- la figure 4 est une vue analogue à celle de la figure 3, montrant la contrefiche en position déverrouillée, l'alignement de la contrefiche ayant été brisé ;
- la figure 5 est une vue schématique du squelette de l'atterrisseur et la contrefiche associée lors de son relevage, représenté ici en position déployée alors que la contrefiche est en position sensiblement alignée ;
- la figure 6 est une vue schématique du squelette de l'atterrisseur et la contrefiche associée lors de son relevage, représenté ici en position en cours de relevage alors que la contrefiche est brisée ;
- la figure 7 est une vue schématique du squelette de l'atterrisseur et la contrefiche associée lors de son relevage, représenté ici en position escamotée ;
- la figure 8 est une vue analogue à celle de la figure 3 d'une variante de réalisation de l'invention ;
- la figure 9 est une vue analogue à celle de la figure 3 d'une autre variante de réalisation de l'invention.

### DESCRIPTION DETAILLEE DE L'INVENTION

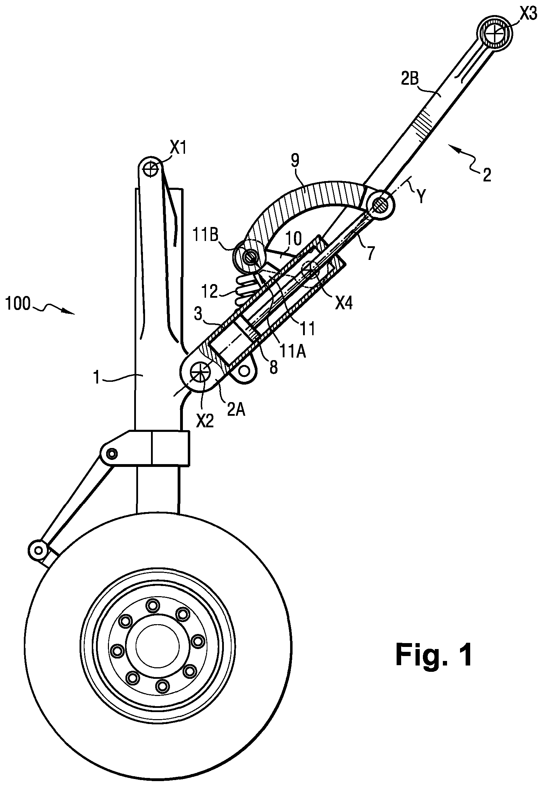

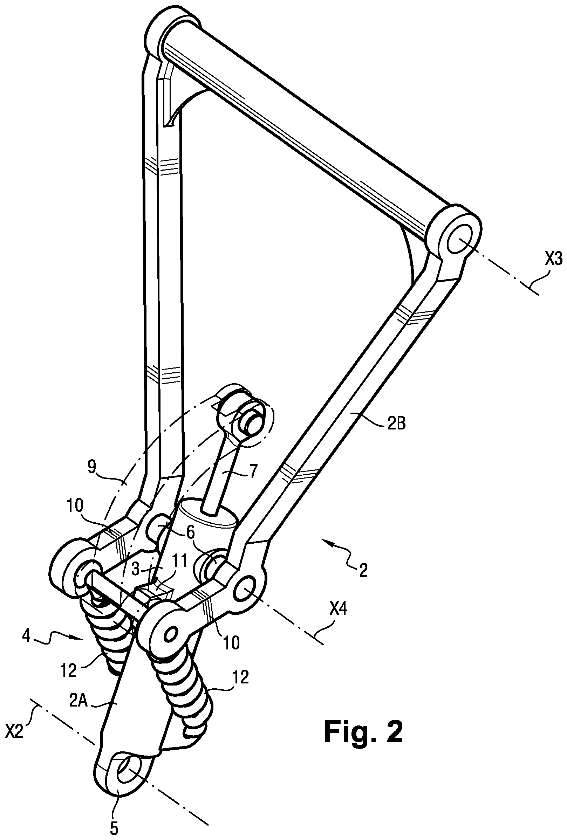

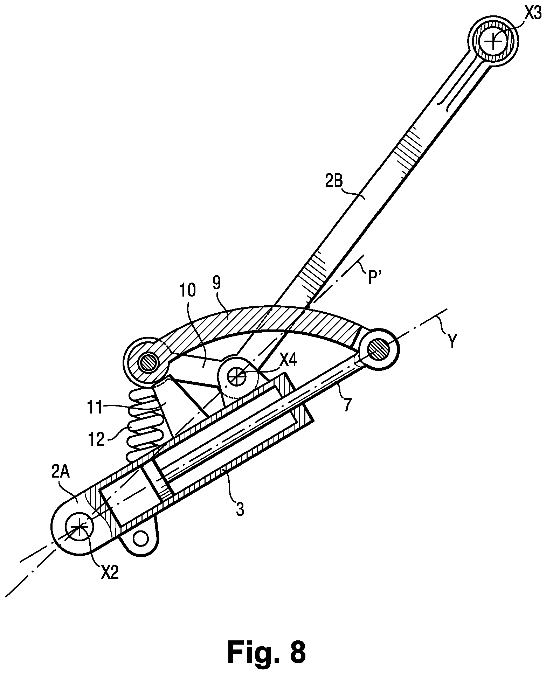

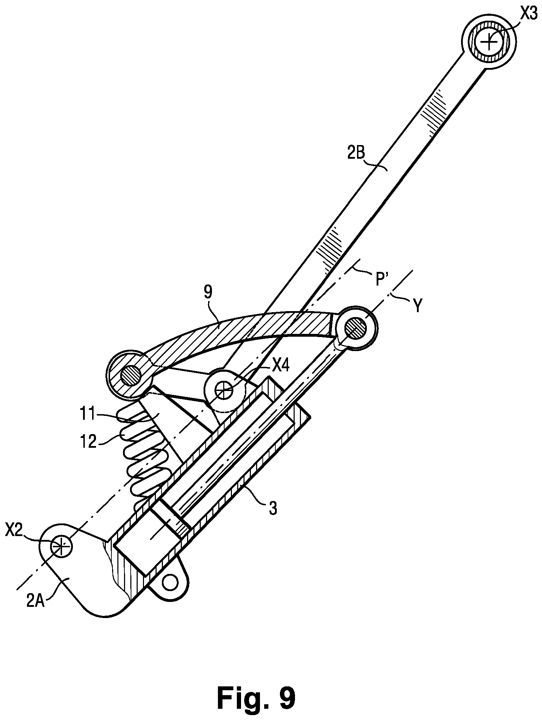

En référence à la figure 1, l'invention concerne un atterrisseur 100 d'aéronef comportant une jambe 1 portant une ou des roues à son extrémité inférieure et montée articulée sur une structure de l'aéronef (non visible ici) selon un axe d'articulation X1 (vu ici en bout). La jambe 1 est stabilisée en position déployée par une contrefiche briseuse 2 comportant un élément inférieur 2A articulé sur la jambe selon un axe d'articulation X2, et un élément supérieur 2B articulé à la structure de l'aéronef selon un axe d'articulation X3, les deux éléments 2A et 2B étant articulés entre eux au niveau d'un genou selon un axe d'articulation X4. Les axes d'articulation sont ici tous parallèles entre eux. Comme visible à la figure 2, l'élément supérieur de contrefiche 2B a la forme générale d'un panneau, tandis que l'élément inférieur de contrefiche 2A est essentiellement constitué par le corps 3 d'un vérin hydraulique 4 portant à son extrémité une chape 5 pour son articulation sur la jambe 1 selon l'axe d'articulation X2, et des tourillons 6 pour son articulation sur l'élément supérieur de contrefiche 2B selon l'axe d'articulation X4. Ainsi, le corps 3 du vérin 4 forme la structure de l'élément inférieur de contrefiche 2A et porte les organes de son attelage à la jambe 1 et à l'élément supérieur de contrefiche 2B. Dans le corps 3 est montée une tige coulissante 7 associée à un piston 8 monté à coulissement étanche dans le corps 3 pour y définir deux chambres hydrauliques. Ici, l'axe de coulissement Y de la tige coulissante 7 est inclus dans le plan défini par les axes d'articulation X2, X4 de l'élément inférieur 2A, mais ceci n'est pas une obligation, comme on le verra plus tard en relation avec les figures 8, 9.

L'extrémité de la tige coulissante 7 est attelée à l'extrémité d'une biellette 9 dont l'autre extrémité est articulée sur des cornes 10 solidaires de l'élément supérieur de contrefiche 2B. Ici, la biellette 9 a une forme courbe pour éviter toute interférence avec les autres constituants de la contrefiche, mais si la configuration le permet, la biellette 9 peut tout à fait être droite. Ainsi, la tige coulissante 7 est attelée à l'élément supérieur de contrefiche 2B par l'intermédiaire de la biellette 9.

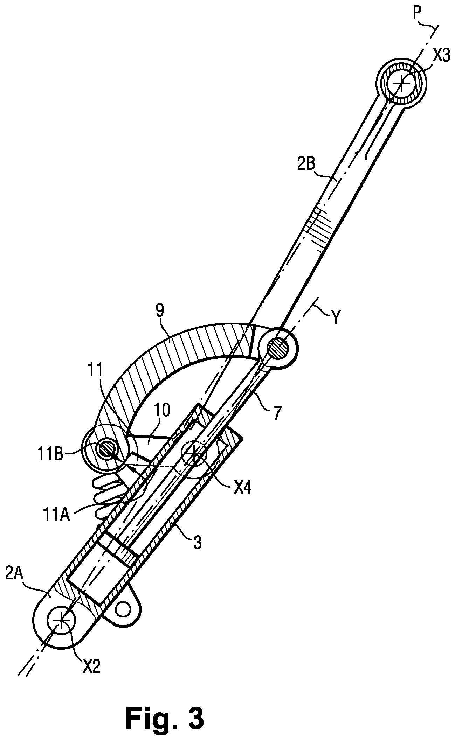

Des butées sont disposées pour définir une position sensiblement alignée des éléments de contrefiche 2A,2B, telle que visible aux figures 1, 2, 3. Cette position sensiblement alignée correspond ici à une position pour laquelle l'axe d'articulation X4 passe légèrement au-delà d'un plan P défini par les axes d'articulation X2, X3 (position dite « overcentered » en anglais). Ici, les butées comprennent l'extrémité 11A d'un pied 11 s'étendant en saillie du corps 3 du vérin hydraulique 4 et venant appuyer sur l'élément supérieur de contrefiche 2B, ici de façon indirecte en venant au contact de l'extrémité 11B de la biellette 9 elle-même articulée sur l'élément supérieur de contrefiche 2B. De façon tout à fait équivalente, les butées 11A, 11B pourraient être organisées directement entre les deux éléments de contrefiche 2A, 2B ou encore entre la biellette 9 et l'élément supérieur de contrefiche 2B, du moment qu'elles définissent la position sensiblement alignée de ces deux éléments de contrefiche. Des ressorts de rappel 12 sont disposés entre les deux éléments de contrefiche 2A, 2B pour rappeler les deux éléments en butée et ainsi les maintenir en position sensiblement alignée. Ainsi, tout déplacement de la jambe 1 étendant la contrefiche 2 provoque au mieux un réalignement géométrique par lequel l'axe d'articulation X4 se rapproche du plan P, mais sans jamais le dépasser, les deux éléments de contrefiche 2A, 2B revenant en butée dès la fin de ce déplacement sous l'action des ressorts de rappel 12. Au contraire, tout déplacement de la jambe 1 compressant la contrefiche 2 confirme les deux éléments de contrefiche 2A, 2B en butée. La position sensiblement alignée est donc une position stable.

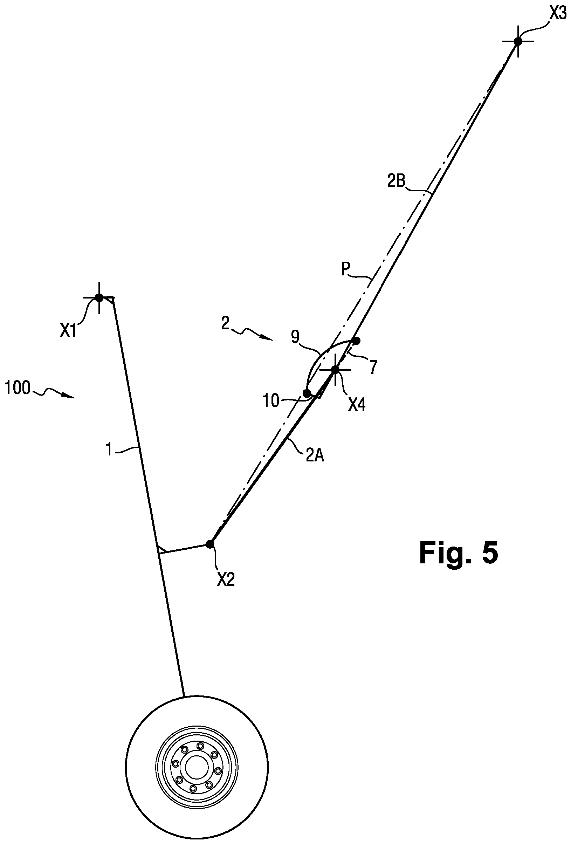

Le fonctionnement de la contrefiche de l'invention est maintenant expliqué en relation aux figures 5 à 7. L'atterrisseur 1 est tout d'abord dans la position déployée illustrée à la figure 5 (qui correspond à la position illustrée à la figure 1). Dans cette position, la contrefiche 2 est maintenue en position sensiblement alignée par les ressorts 12 qui rappellent les deux éléments de contrefiche 2A, 2B en butée. La contrefiche 2 forme alors un ensemble rigide qui triangule la jambe 1 pour la maintenir en position déployée. Au besoin, cette position peut être confirmée en alimentant le vérin hydraulique 4 pour faire rentrer la tige coulissante 7.

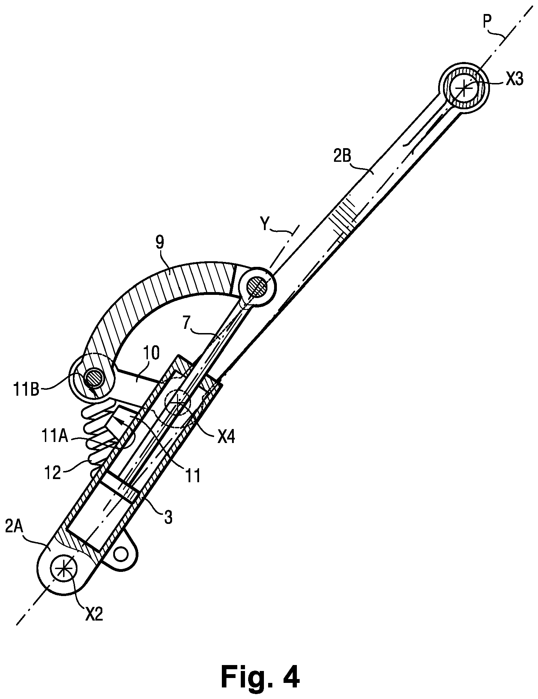

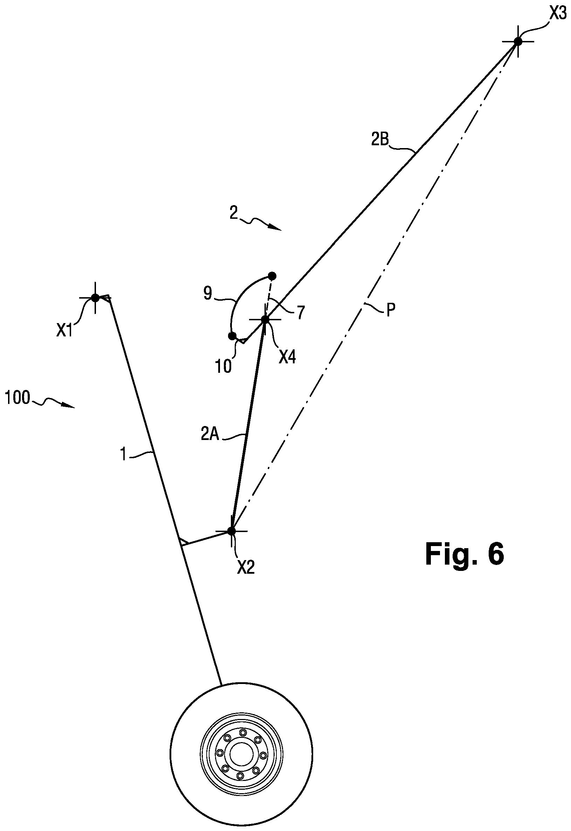

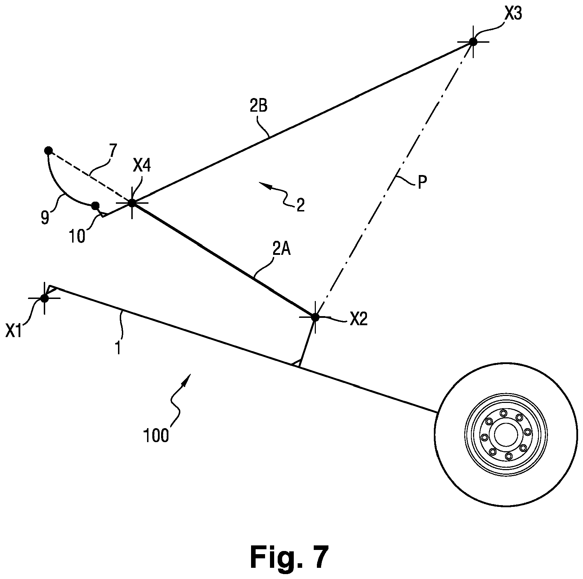

Pour briser l'alignement de la contrefiche 2, et ainsi déverrouiller la position déployée de l'atterrisseur, on alimente le vérin hydraulique 4 pour faire sortir la tige coulissante 7. Celle-ci tire alors sur la biellette 9, ce qui a pour conséquence de déplacer les deux éléments de contrefiche 2A, 2B à l'encontre des ressorts de rappel 12 vers la position brisée illustrée à la figure 6 mais également à la figure 4, sur lesquelles on constate que l'axe X4 du genou de la contrefiche est passé de l'autre côté du plan P défini par les axes d'articulation X2, X3. La contrefiche 2 est ainsi déverrouillée, de sorte que la jambe 1 n'est plus immobilisée dans la position déployée. Puis, continuant à faire sortir la tige coulissante 7, celle-ci continue à tirer sur la biellette 9, et donc à forcer les deux éléments de contrefiche 2A, 2B à se replier, entraînant ainsi le déplacement de la jambe 1 vers la position escamotée telle qu'illustrée à la figure 7. Ainsi, le même vérin 4 assure à la fois le déverrouillage et le relevage de l'atterrisseur vers sa position escamotée.

Pour le mouvement inverse, il suffit de laisser faire la gravité et les forces aérodynamiques qui entraînent l'atterrisseur vers le bas, en régulant si besoin la vitesse de descente de l'atterrisseur vers la position déployée par laminage du fluide expulsé de la chambre pleine du vérin 4. La contrefiche 2 va se réaligner automatiquement sous l'effet des ressorts 12.

Selon des variantes de réalisation illustrées aux figures 8 et 9, il est possible de disposer le vérin 4 de sorte que l'axe de coulissement Y de la tige ne soit pas contenu dans le plan P' défini par les axes d'articulation X2, X4 (autrement dit, l'axe de coulissement Y de la tige est distinct du plan P'). Dans la disposition illustrée à la figure 8, l'axe Y de coulissement de la tige coulissante 7 reste néanmoins concourant avec l'axe d'articulation X2, tandis que dans la disposition illustrée à la figure 9, l'axe de coulissement Y ne concourt avec aucun des axes d'articulation X2 et X4. Cette liberté de placement permet d'optimiser la position de l'axe de coulissement de la tige coulissante au regard des axes d'articulation X2 et X4. Le fait de libérer l'axe d'articulation X4 de l'axe de coulissement Y autorise également plus de possibilités pour la réalisation de la liaison de l'articulation X4.

L'invention n'est pas limitée à ce qui vient d'être décrit, mais englobe au contraire toute variante entrant dans le cadre défini par les revendications.

En particulier, bien qu'ici on a illustré l'actionneur linéaire de contrefiche comme étant un vérin hydraulique, on pourra également utiliser un actionneur linéaire électrique ou électromécanique.

Bien que l'on ait indiqué que l'élément de contrefiche intégrant l'actionneur linéaire était l'élément inférieur de contrefiche attelé à la jambe de l'atterrisseur, on pourra bien entendu intégrer l'actionneur linéaire à l'autre élément de contrefiche.

Bien que l'on ait indiqué ici que le corps de l'actionneur linéaire portait une chape et des tourillons de sorte à former la structure de l'un des éléments de contrefiche, on pourra alternativement rapporter le corps de l'actionneur linéaire sur l'élément de contrefiche concerné, par exemple par vissage ou tout autre moyen d'assemblage.

Enfin, bien que l'on ait indiqué ici qu'il faut faire sortir la tige coulissante pour déverrouiller et replier la contrefiche, on pourra bien entendu prévoir une cinématique dans laquelle le déverrouillage et le repliage de la contrefiche s'obtient en faisant rentrer la tige coulissante.

## Revendications

1. Atterrisseur (100) d'aéronef comportant une jambe (1) destinée à être montée mobile sur une structure de l'aéronef entre une position déployée et une position escamotée, l'atterrisseur étant équipé d'une contrefiche briseuse (2) comportant deux éléments articulés (2A, 2B) entre eux au niveau d'un genou, avec un premier élément (2B) destiné à être attelé à la structure de l'aéronef et un deuxième élément (2A) destiné à être attelé à l'atterrisseur, un
organe de rappel (12) étant disposé entre les deux éléments rappelant ceux-ci vers une position sensiblement alignée définie par des butées respectives (11A, 11B), l'un des éléments de la contrefiche intégrant un actionneur linéaire (4) comportant une tige coulissante (7) qui est attelée à l'autre élément de la contrefiche par l'intermédiaire d'une biellette (9), le tout étant agencé de sorte que le déplacement de la tige coulissante de l'actionneur dans un seul et même sens provoque successivement le désalignement des éléments de la contrefiche et le déplacement de l'atterrisseur de la position déployée à la position escamotée.

2. Atterrisseur selon la revendication 1, dans lequel l'actionneur linéaire a un corps (3) dans lequel la tige coulissante (7) coulisse et qui forme l'élément de contrefiche associé en portant des organes d'attelage (5,6) de cet élément à l'autre élément et à celle de la jambe ou de la structure de l'aéronef à laquelle il est attelé.

3. Atterrisseur selon la revendication 2, dans lequel la tige (7) coulisse selon un axe de coulissement (Y) qui est contenu dans un plan (P') défini par des axes d'articulation (X2, X4) de l'élément de contrefiche auquel il est intégré.

4. Atterrisseur selon la revendication 1, dans lequel l'actionneur linéaire (4) est intégré à celui (2A) des éléments de contrefiche qui est attelé à la jambe de l'atterrisseur.

5. Atterrisseur selon la revendication 4, dans lequel celui (2B) des éléments de contrefiche qui ne porte pas l'actionneur linéaire a une forme générale de panneau.

6. Atterrisseur selon la revendication 2, dans lequel la tige (7) coulisse selon un axe de coulissement (Y) qui est distinct d'un plan (P') défini par des axes d'articulation (X2, X4) de l'élément de contrefiche auquel il est intégré.

7. Atterrisseur selon la revendication 1, dans lequel les butées comportent d'une part une extrémité (11A) d'un pied (11) saillant de l'élément de contrefiche (2A) portant l'actionneur linéaire, et d'autre part une extrémité (11B) de la biellette (9) qui est articulée sur l'autre élément de contrefiche (2B).

## Patentansprüche

1. Luftfahrzeugfahrwerk (100) mit einem Bein (1), das dazu bestimmt ist, an einer Struktur des Luftfahrzeugs zwischen einer ausgefahrenen Position und einer eingezogenen Position beweglich montiert zu sein, wobei das Fahrwerk mit einer Knickstrebe (2) ausgestattet ist, die zwei an einem Knie gelenkig miteinander verbundene Elemente (2A, 2B) enthält, nämlich ein erstes Element (2B) zur Ankupplung an die Luftfahrzeugstruktur und ein zweites Element (2A) zur Ankupplung an das Fahrwerk, wobei zwischen den beiden Elementen ein Rückstellorgan (12) angeordnet ist, das diese in eine durch jeweilige Anschläge (11A, 11B) definierte, im Wesentlichen miteinander ausgerichtete Position zurückstellt, wobei eines der Knickstrebenelemente einen Linearaktuator (4) mit einer Gleitstange (7) enthält, die über einen Schwingarm (9) mit dem anderen Knickstrebenelement verbunden ist, wobei die Bestandteile in ihrer Gesamtheit derart angeordnet sind, dass die in ein und derselben Richtung erfolgende Verfahrbewegung der Gleitstange des Aktuators bewirkt, dass die Knickstrebenelemente sukzessive aus ihrer miteinander ausgerichteten Position herausbewegt werden und das Fahrwerk von der ausgefahrenen Position in die eingezogene Position überführt wird.

2. Fahrwerk nach Anspruch 1, wobei der Linearaktuator einen Körper (3) aufweist, in welchem die Gleitstange (7) gleitet und welcher das zugehörige Knickstrebenelement bildet, indem er Kupplungsorgane (5, 6) zur Ankupplung dieses Elements an das andere Element sowie an jenes des Beins und an jenes der Luftfahrzeugstruktur, an das es angekuppelt ist, trägt.

3. Fahrwerk nach Anspruch 2, wobei die Gleitstange (7) entlang einer Gleitachse (Y) gleitet, welche in einer Ebene (P') enthalten ist, die durch Gelenkachsen (X2, X4) des Knickstrebenelements, in das sie integriert ist, definiert ist.

4. Fahrwerk nach Anspruch 1, wobei der Linearaktuator (4) in dasjenige (2A) der Knickstrebenelemente integriert ist, das an das Fahrwerksbein angekuppelt ist.

5. Fahrwerk nach Anspruch 4, wobei dasjenige (2B) der Knickstrebenelemente, das den Linearaktuator nicht trägt, eine allgemeine Plattenform aufweist.

6. Fahrwerk nach Anspruch 2, wobei die Gleitstange (7) entlang einer Gleitachse (Y) gleitet, die sich von einer durch Gelenkachsen (X2, X4) des Knickstrebenelements definierten Ebene (P'), in welche sie integriert ist, unterscheidet.

7. Fahrwerk nach Anspruch 1, wobei die Anschläge einerseits ein Ende (11A) eines Fußes (11) enthalten, der von dem den Linearaktuator tragenden Knickstrebenelement (2A) vorsteht, und andererseits ein Ende (11B) des Schwingarms (9) enthalten, der an dem anderen Knickstrebenelement (2B) angelenkt ist.

## Claims

1. An aircraft undercarriage (100) including a leg (1) for mounting on a structure of the aircraft so as to be movable between a deployed position and a retracted position, the undercarriage being fitted with a breaker strut (2) comprising two hinged elements (2A, 2B) that are hinged together at a knee, with a first element (2B) for coupling to the structure of the aircraft and a second element (2A) for coupling to the undercarriage, a return member (12) being arranged between the two elements to urge them towards a substantially aligned position that is defined by respective abutments (11A, 11B), one of the strut elements incorporating a linear actuator (4) having a slidable rod (7) that is coupled to the other strut element by means of a link (9), the assembly being arranged in such a manner that moving the slidable rod of the actuator in a single direction causes, in succession, the elements of the strut to move out of alignment and the undercarriage to move from the deployed position to the retracted position.

2. An undercarriage according to claim 1, wherein the linear actuator has a body (3) in which the slidable rod (7) slides and that forms the associated strut element by carrying coupling members (5, 6) for coupling that element both to the other element and also to that one of the leg and the structure of the aircraft to which that element is coupled.

3. An undercarriage according to claim 2, wherein the rod (7) slides along a sliding axis (Y) that is contained in a plane (P') defined by hinge axes (X2, X4) of the strut element in which it is incorporated.

4. An undercarriage according to claim 1, wherein the linear actuator (4) is incorporated in that one (2A) of the strut elements that is coupled to the leg of the undercarriage.

5. An undercarriage according to claim 4, wherein that one (2B) of the strut elements that does not carry the linear actuator has the general shape of a panel.

6. An undercarriage according to claim 2, wherein the rod (7) slides along a sliding axis (Y) that does not lie in a plane (P') defined by hinge axes (X2, X4) of the strut element in which it is incorporated.

7. An undercarriage according to claim 1, wherein the abutments comprise firstly the end (11A) of a tab (11) projecting from the strut element (2A) carrying the linear actuator, and secondly the end (11B) of the link (9) that is hinged to the other strut element (2B).
